# EUROPÄISCHE PATENTSCHRIFT

(11) **EP 2 910 836 B1**
(45) Veröffentlichungstag und Bekanntmachung des Hinweises auf die Patenterteilung: **15.05.2019**
(21) Anmeldenummer: 14199763.5
(22) Anmeldetag: 22.12.2014
(51) Int. Cl.: F16L 53/38

(54) **Verbinder für eine Fluidleitung**
Connector for a fluid line
Connecteur pour une conduite de fluide

(30) Priorität: 24.02.2014 DE 102014102362
(43) Veröffentlichungstag der Anmeldung: 26.08.2015
(73) Patentinhaber: NORMA Germany GmbH, 63477 Maintal (DE)
(72) Erfinder: Birman, Ervin, 24000 Subotica (RS); Mann, Stephan, 63477 Maintal (DE)
(74) Vertreter: Patentanwälte Olbricht Buchhold Keulertz

(56) Entgegenhaltungen:
- WO-A1-2009/124910
- DE-A1-102011 102 154
- DE-U1-202007 018 086

## Beschreibung

Die Erfindung betrifft einen Verbinder für eine Fluidleitung gemäß dem Oberbegriff des Anspruchs 1.

Ein derartiger Verbinder ist beispielsweise aus DE 10 2011 102 154 A1 bekannt.

Die Erfindung wird im Folgenden in Verbindung mit einer Fluidleitung beschrieben, durch die Harnstoff (Urea) von einem Vorrat zu einer Verbrauchsstelle gefördert werden kann. Harnstoff wird bei Dieselmotoren verwendet, um Stickoxide zu reduzieren.

Harnstoff friert bei einer Temperatur von -11 °C ein und ist dann nicht mehr fließfähig. Aus Gründen des Umweltschutzes muss jedoch eine vorbestimmte Zeit nach dem Anlassen eines Dieselmotors auch bei niedrigen Temperaturen Harnstoff zur Verfügung stehen. Es ist deswegen bekannt, die Fluidleitung zu beheizen. Die Beheizung soll sich dabei auch auf den Verbinder erstrecken.

Wenn man die Heizeinrichtung innerhalb der Leitung anordnet, also im Volumen des Rohres, muss man die Heizeinrichtung oder zumindest ihren Anschluss an irgendeiner Stelle aus der Fluidleitung herausführen, um elektrische Energie zuführen zu können. Dies erfolgt zweckmäßigerweise in einem Verbinder.

Die Stelle, wo die Heizeinrichtung oder Teile davon aus dem Verbinder austreten, müssen abgedichtet werden. Hierfür wird im bekannten Fall der Stopfen verwendet. Dieser Stopfen kann durch die Spritzgussmasse in dem Gehäuse festgehalten werden. Allerdings ergibt sich beim Aufbringen der Spritzgussmasse das Problem, dass die Spritzgussmasse auch am Stopfen vorbei vordringen kann und damit in Bereiche des Verbinders gelangt, an denen sie nicht erwünscht ist.

Der Erfindung liegt die Aufgabe zugrunde, einen Verbinder mit geringem Aufwand zu fertigen.

Diese Aufgabe wird mit einem Verbinder gemäß Anspruch 1 gelöst.

Das Trennelement fungiert beim Auftragen der Spritzgussmasse sozusagen als Sperre, die ein Vordringen der Spritzgussmasse auch bei höheren Drücken in das Innere des Gehäuses verhindert. Man kann daher das Aufbringen der Spritzgussmasse auf die Bereiche beschränken, an denen die Spritzgussmasse gewünscht ist.

Hierbei ist bevorzugt, dass das Trennelement einen Spalt zwischen dem Stopfen und dem Gehäuse abdeckt. Damit wird das Eindringen der Spritzgussmasse in den Spalt zuverlässig verhindert.

Das Trennelement ist mit der Spritzgussmasse verschmolzen. Zum Aufbringen der Spritzgussmasse wird der Verbinder in eine entsprechende Form eingelegt und dann die Spritzgussmasse mit einer erhöhten Temperatur und mit einem erhöhten Druck in die Form eingespritzt. Man kann das Trennelement aus einem Material bilden, das bei der Temperatur, mit der die Spritzgussmasse in die Form eingespritzt wird, anfängt zu schmelzen, so dass die Spritzgussmasse und das Trennelement ohne zusätzlichen Aufwand miteinander verschmolzen werden können. Damit ist das Trennelement nach Abschluss des Spritzgussvorgangs in der einmal eingenommenen Position fixiert.

Hierbei ist bevorzugt, dass das Trennelement eine Dicke aufweist, die so groß ist, dass das Trennelement beim Aufbringen der Spritzgussmasse nicht vollständig aufschmilzt. Die Spritzgussmasse hat beim Einbringen in die Spritzgussform zwar eine relativ hohe Temperatur. Sie beginnt jedoch abzukühlen, sobald sie in die Spritzgussform eingebracht worden ist. Dabei gibt sie auch Wärme an das Trennelement ab, wodurch das Trennelement jedenfalls an der Berührungsstelle zwischen der Spritzgussmasse und dem Trennelement aufschmilzt. Wenn man jedoch das Trennelement dick genug wählt, dann ist die Abkühlung der Spritzgussmasse weit genug fortgeschritten, bevor das Trennelement vollständig geschmolzen ist. Dadurch wird verhindert, dass Teile des Trennelements in das Innere des Gehäuses vordringen, wo sie nicht gewünscht sind. Das Trennelement bildet also nach wie vor eine Barriere gegen ein Vordringen der Spritzgussmasse in das Innere des Gehäuses.

Vorzugsweise ist das Trennelement aus dem gleichen Material wie die Spritzgussmasse gebildet. Damit ist die Abstimmung der Temperaturen von Spritzgussmasse und Trennelement relativ einfach.

Vorzugweise hält der Stopfen eine Dichtung im Gehäuse, die die Heizeinrichtung umgibt. Diese Dichtung kann beispielsweise als O-Ring ausgebildet sein. Eine derartige Dichtung ist relativ empfindlich, wenn sie mit Spritzgussmasse beaufschlagt wird. Durch die Verwendung des Trennelements wird das Vordringen von Spritzgussmasse zur Dichtung zuverlässig verhindert. Man kann dann die Dichtung verwenden, um eine Dichtfunktion zu erfüllen, und den Stopfen, um die Haltefunktion für die Dichtung zu bewerkstelligen.

Die Heizeinrichtung ist als Heizstab ausgebildet, der innerhalb des Trennelements endet, wobei mindestens eine elektrische Anschlussleitung des Heizstabes aus dem Heizstab heraus und durch das Trennelement hindurchgeführt ist. Die elektrische Anschlussleitung hat einen wesentlich kleineren Durchmesser als der Heizstab. Somit ist auch nur eine kleinere Öffnung im Trennelement erforderlich, um die elektrische Anschlussleitung hindurchzuführen. Auch wenn man zwei elektrische Anschlussleitungen des Heizstabes durch das Trennelement hindurchführen muss, ist die Größe der hierfür erforderlichen Öffnung geringer als die Größe einer Öffnung für den gesamten Heizstab. Je kleiner die entsprechende Öffnung ist, desto geringer ist das Risiko, dass Spritzgussmasse durch die Öffnung hindurchtritt. Wenn das Trennelement durch die Spritzgussmasse angeschmolzen wird, dann ist das Risiko ohnehin geringer. Sobald das Trennelement angeschmolzen wird, wird geschmolzenes Material des Trennelementes durch den beim Spritzgießen herrschenden hohen Druck in die entsprechende Öffnung verschoben werden und kann dort erstarren.

Bevorzugterweise steht das Trennelement über die Austrittsöffnung vor und weist an seinem vorstehenden Abschnitt eine abgerundete oder angefaste Kante auf. Eine derartige Ausbildung ist insbesondere dann von Vorteil, wenn elektrische Anschlussleitungen des Heizstabs oder einer anderen Heizeinrichtung über das Trennelement geführt werden. Aufgrund der abgerundeten oder angefasten Kante ist die Gefahr, dass die elektrische Anschlussleitung durch eine scharfkantige Begrenzung des Trennelements beschädigt wird, relativ gering.

Auch ist ein Vorteil, wenn das Trennelement einen abgewinkelten, über zumindest einen Teil seines Umfangs umlaufenden Rand aufweist, wobei der Austrittsabschnitt einen Stutzen aufweist, in dem die Austrittsöffnung angeordnet ist und der Rand den Stutzen an dessen Umfang überdeckt. Das Trennelement ist also nach Art einer Kappe oder eines umgekehrten Bechers ausgebildet. Damit wird die Sicherheit gegen ein Vordringen der Spritzgussmasse in das Innere des Gehäuses noch einmal erhöht.

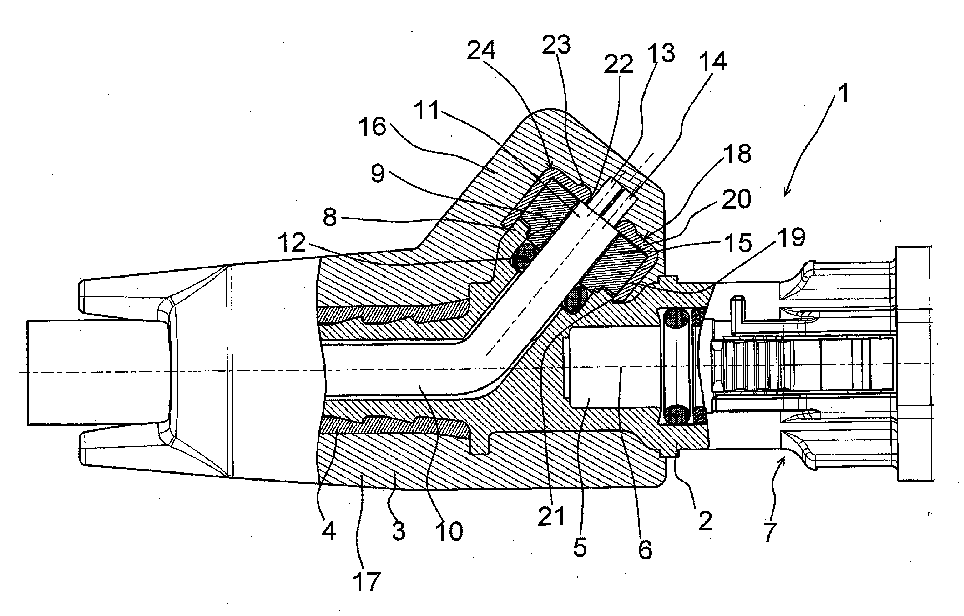

Die Erfindung wird im Folgenden anhand eines bevorzugten Ausführungsbeispiels in Verbindung mit der Zeichnung beschrieben. Hierin zeigt die
- einzige Figur: einen schematischen Längsschnitt durch einen Verbinder.

Ein Verbinder 1 für eine Fluidleitung weist ein Gehäuse 2 mit einem Anschlussstutzen 3 auf. Auf den Anschlussstutzen 3 ist ein Rohr 4 aufgeschoben. Der Anschlussstutzen 3 weist eine "Tannenbaumstruktur" auf.

Durch den Anschlussstutzen 3 verläuft ein Durchgangskanal 5 mit einer Längsachse 6. An dem dem Anschlussstutzen 3 entgegengesetzten Ende des Gehäuses 2 ist eine Verbindungsgeometrie 7 vorgesehen, mit der der Verbinder 1 mit einem nicht näher dargestellten Gegenelement verbunden werden kann, beispielsweise dem Stutzen eines Tanks.

Das Gehäuse 2 weist einen Austrittsstutzen 8 auf, der eine Austrittsöffnung 9 umschließt.

Im Durchgangskanal 5 ist eine Heizeinrichtung in Form eines Heizstabs 10 angeordnet. Der Heizstab 10 weist einen abgewinkelten Abschnitt 11 auf, der mit der Längsachse 6 einen Winkel einschließt. Der Abschnitt 11 ragt in den Austrittsstutzen 8 hinein.

Eine Dichtung 12, beispielsweise ein O-Ring, umgibt den Abschnitt 11 des Heizstabs 10 und dichtet zwischen dem Heizstab 10 und dem Gehäuse 2 ab.

Aus dem Heizstab 10 sind zwei elektrische Anschlussleitungen 13, 14 herausgeführt, über die elektrische Energie zugeführt werden kann, um den Heizstab auf eine erhöhte Temperatur zu bringen. Der Heizstab 10, der sich im Übrigen auch in das Rohr 4 erstreckt, ist damit in der Lage, ein Fluid, beispielsweise eine wässrige Harnstofflösung, zu beheizen, die sich in dem Rohr 4 und im Verbinder 1 befindet.

Ein Stopfen 15 ist im Austrittsstutzen 8 angeordnet und umgibt den Abschnitt 11 des Heizstabs 10. Der Stopfen 15 dient dazu, die Dichtung 12 an ihrer Position zu halten. Der Stopfen 15 ragt aus der Austrittsöffnung 9 heraus. Eine Spritzgussmasse 16 überdeckt den Austrittsstutzen 8 und dessen nähere Umgebung, die im Folgenden auch als "Austrittsabschnitt" bezeichnet wird. Die Spritzgussmasse 16 weist auch einen Abschnitt 17 auf, der sich auf der dem Austrittsstutzen 8 gegenüberliegenden Seite des Gehäuses 2 befindet. Damit wird der Stopfen 15 durch einen Formschluss im Gehäuse 2 gehalten.

Zwischen der Spritzgussmasse 16 und dem Stopfen ist ein Trennelement 18 angeordnet. Das Trennelement 18 weist einen Rand 19 auf, der gegenüber einem Boden 20 des Trennelements 18 abgewinkelt ist. Der Rand 19 muss nicht über den gesamten Umfang des Trennelements 18 verlaufen. Im vorliegenden Ausführungsbeispiel ist dies jedoch der Fall. Dementsprechend umschließt der Rand 19 den Austrittsstutzen 8 an dessen Umfang über eine kleine axiale Länge. Das Trennelement 18 deckt dementsprechend den Stopfen 15 und einen Spalt 21 zwischen dem Stopfen 15 und dem Gehäuse 2, genauer gesagt dem Austrittsstutzen 8 ab.

Das Trennelement weist eine Öffnung 22 auf, durch die die elektrischen Anschlussleitungen 13, 14 geführt sind. Der Heizstab 10 endet innerhalb des Trennelements 18 bündig mit dem Stopfen 15. Das Trennelement 18 liegt also auf einer Stirnseite des Abschnitts 11 des Heizstabs 10 auf.

Das Trennelement 18, das, wie oben erläutert, als Kappe oder Becher ausgebildet ist, weist eine abgerundete oder angefaste Kante 24 auf, über die die elektrischen Anschlussleitungen 13, 14 geführt werden können. Dies ist in der Zeichnung nicht zu erkennen, da die elektrischen Anschlussleitungen 13, 14 außerhalb der Zeichenebene verlaufen. Durch die runde oder abgefaste Form der Kante 24 ist die Gefahr, dass die elektrischen Anschlussleitungen 13, 14 durch eine scharfe Kante beschädigt werden, praktisch nicht mehr gegeben.

Die Öffnung 22 ist von einem umlaufenden abgerundeten Wulst 23 umgeben, so dass auch hier eine scharfe Kante und damit das Risiko einer Beschädigung der elektrischen Anschlussleitungen 13, 14 vermieden werden kann.

Das Trennelement 18 ist aus dem gleichen Material wie die Spritzgussmasse 16 gebildet. Dies ist allerdings nicht unbedingt erforderlich. Das Material des Trennelements 18 sollte aber an das Material der Spritzgussmasse 16 so angepasst sein, dass es beim Auftragen der Spritzgussmasse 16 zu schmelzen beginnt oder jedenfalls soweit erweicht wird, dass das Trennelement 18 mit der Spritzgussmasse 16 verschmilzt.

Das Trennelement 18 weist allerdings eine Dicke auf, die so groß ist, dass das Trennelement 18 nicht vollständig aufschmilzt, wenn die Spritzgussmasse 16 aufgebracht wird. Es verbleibt also immer noch eine "Schutzscheibe" zwischen der Spritzgussmasse 16 und dem Stopfen 15, so dass man zuverlässig verhindern kann, dass Spritzgussmasse 16 in das Innere des Gehäuses 2 gelangt.

Für die Fertigung des Verbinders 1 wird der Heizstab 10 so eingeführt, dass sein Abschnitt 11 in den Austrittsstutzen 8 hineinragt. Die Dichtung 12 und der Stopfen 15 werden auf den Abschnitt 11 aufgeschoben. Falls noch nicht geschehen, werden die elektrischen Anschlussleitungen 13, 14 freigelegt. Das Trennelement 18 wird dann auf den Anschlussstutzen 8 aufgesetzt, wobei die elektrischen Anschlussleitungen 13, 14 durch die Öffnung 22 geführt worden sind. Diese Einheit aus Gehäuse 2, Heizstab 10, Dichtung 12, Stopfen 15 und Trennelement 18 wird dann in einer Spritzgussform positioniert und die Spritzgussmasse 16 wird mit erhöhter Temperatur und unter erhöhtem Druck in die Spritzgussform eingespritzt. Sobald die Spritzgussmasse 16 in der Spritzgussform angekommen ist, kühlt sie ab. In den Bereichen, wo sie das Trennelement 18 kontaktiert, beginnt das Trennelement 18 allerdings zu schmelzen, so dass die Spritzgussmasse 16 mit dem Trennelement 18 verschmolzen wird. Da die Spritzgussmasse 16 bei diesem Vorgang an das Trennelement 18 Wärme abgeben muss, sinkt die Temperatur und es wird verhindert, dass das Trennelement 18 vollständig aufschmilzt. Damit wird verhindert, dass Spritzgussmasse 16 in das Innere des Gehäuses 2 gelangt.

## Patentansprüche

1. Verbinder (1) für eine Fluidleitung mit einem Gehäuse (2), das einen Anschlussstutzen (3), der mit einem Rohr (4) verbindbar ist, und eine Verbindungsgeometrie (7), die mit einem Gegenelement verbindbar ist, aufweist, wobei das Gehäuse (2) eine in einem Austrittsabschnitt angeordnete Austrittsöffnung (9) aufweist, durch die eine Heizeinrichtung (10, 11) aus dem Gehäuse (2) nach außen geführt ist, wobei die Heizeinrichtung (10, 11) durch einen Stopfen (15) geführt ist, der in der Austrittsöffnung (9) angeordnet ist und der Austrittsabschnitt mit einer die Austrittsöffnung (9) bedeckenden Spritzgussmasse (16) versehen ist, wobei zwischen der Spritzgussmasse (16) und dem Stopfen (15) ein Trennelement (18) angeordnet ist, wobei das Trennelement (18) mit der Spritzgussmasse (16) verschmolzen ist, **dadurch gekennzeichnet, dass** die Heizeinrichtung (10, 11) als Heizstab ausgebildet ist, der innerhalb des Trennelements (18) bündig mit dem Stopfen (15) endet, wobei mindestens eine elektrische Anschlussleitung (13, 14) des Heizstabes aus dem Heizstab heraus und durch eine Öffnung (22) des Trennelements (18) hindurch geführt ist, wobei die elektrische Anschlussleitung (13, 14) einen kleineren Durchmesser als der Heizstab aufweist, und wobei die Öffnung (22) des Trennelements (18) von einem umlaufenden, abgerundeten Wulst (23) umgeben ist.

2. Verbinder nach Anspruch 1, **dadurch gekennzeichnet, dass** das Trennelement (18) einen Spalt (21) zwischen dem Stopfen (15) und dem Gehäuse (2) abdeckt.

3. Verbinder nach Anspruch 1, **dadurch gekennzeichnet, dass** das Trennelement (18) eine Dicke aufweist, die so groß ist, dass das Trennelement (18) beim Aufbringen der Spritzgussmasse (16) nicht vollständig aufschmilzt.

4. Verbinder nach einem der Ansprüche 1 bis 3, **dadurch gekennzeichnet, dass** das Trennelement (18) aus dem gleichen Material wie die Spritzgussmasse (16) gebildet ist.

5. Verbinder nach einem der Ansprüche 1 bis 4, **dadurch gekennzeichnet, dass** der Stopfen (15) eine Dichtung (12) im Gehäuse (2) hält, die die Heizeinrichtung (10, 11) umgibt.

6. Verbinder nach einem der Ansprüche 1 bis 5, **dadurch gekennzeichnet, dass** das Trennelement (18) über die Austrittsöffnung (9) vorsteht und an seinem vorstehenden Abschnitt eine abgerundete oder angefaste Kante (24) aufweist.

7. Verbinder nach einem der Ansprüche 1 bis 6, **dadurch gekennzeichnet, dass** das Trennelement (18) einen abgewinkelten, über zumindest einen Teil seines Umfangs umlaufenden Rand (19) aufweist, wobei der Austrittsabschnitt einen Austrittsstutzen (8) aufweist, in dem die Austrittsöffnung (9) angeordnet ist und der Rand (19) den Austrittsstutzen (8) an dessen Umfang überdeckt.

## Claims

1. Connector (1) for a fluid line having a housing (2), which has a connecting piece (3), which is able to be connected with a pipe (4) and a join geometry (7) which can be connected with a counter element, wherein the housing (2) has an output opening (9) arranged in an output portion, through which output opening a heating device (10, 11) is guided out of the housing (2) to the outside, wherein the heating device (10, 11) is guided by a plug (15) which is arranged in the output opening (9) and the output portion is furnished with an injection moulding compound (16) covering the output opening (9), wherein between the injection moulding compound (16) and the plug (15) is arranged a separating element (18), wherein the separating element (18) is fused with the injection moulding compound (16), **characterised in that** the heating device (10, 11) is in the form of a heating rod, which ends within the separating element (18) flush with the plug (15), wherein at least one electrical connecting line (13, 14) of the heating rod is guided out of the heating rod and through an opening (22) of the separating element (18), wherein the electrical connecting line (13, 14) has a smaller diameter than the heating rod, and wherein the opening (22) of the separating element (18) is surrounded by a peripheral, rounded bead (23).

2. Connector according to claim 1, **characterised in that** the separating element (18) covers a gap (21) between the plug (15) and the housing (2).

3. Connector according to claim 1, **characterised in that** the separating element (18) has a thickness which is of a size such that the separating element (18) at the application of the injection moulding compound (16) does not completely melt.

4. Connector according to any of claims 1 to 3, **characterised in that** the separating element (18) is formed from the same material as the injection moulding compound (16).

5. Connector according to any of claims 1 to 4, **characterised in that** the plug (15) holds a seal (12) in the housing (2), which surrounds the heating device (10, 11).

6. Connector according to any of claims 1 to 5, **characterised in that** the separating element (18) protrudes beyond the output opening (9) and has on its protruding portion a rounded or chamfered edge (24).

7. Connector according to any of claims 1 to 6, **characterised in that** the separating element (18) has an angled edge (19) surrounding at least a part of its periphery, wherein the outlet section has an outlet connecting piece (8) in which the outlet opening (9) is arranged and the edge (19) covers the outlet connecting piece (8) at its periphery.

## Revendications

1. Connecteur (1) pour une conduite de fluide avec un boîtier (2), qui présente une tubulure de raccordement (3), qui peut être connectée à un tube (4), et une géométrie de connexion (7), qui peut être connectée à un contre-élément, dans lequel le boîtier (2) présente un orifice de sortie (9) agencé dans une section de sortie, par lequel un dispositif de chauffage (10, 11) est guidé du boîtier (2) vers l'extérieur, dans lequel le dispositif de chauffage (10, 11) est guidé à travers un bouchon (15), qui est agencé dans l'orifice de sortie (9) et la section de sortie est dotée d'une matière de moulage par injection (16) couvrant l'orifice de sortie (9), dans lequel un élément de séparation (18) est agencé entre la matière de moulage par injection (16) et le bouchon (15), dans lequel l'élément de séparation (18) est fondu avec la matière de moulage par injection (16), **caractérisé en ce que** le dispositif de chauffage (10, 11) est réalisé en tant qu'élément chauffant, qui se termine en affleurement avec le bouchon (15) à l'intérieur de l'élément de séparation (18), dans lequel au moins une conduite de raccordement électrique (13, 14) de l'élément chauffant est guidée hors de l'élément chauffant et à travers un orifice (22) de l'élément de séparation (18), dans lequel la conduite de raccordement électrique (13, 14) présente un plus petit diamètre que l'élément chauffant, et dans lequel l'orifice (22) de l'élément de séparation (18) est entouré par un bourrelet (23) arrondi périphérique.

2. Connecteur selon la revendication 1, **caractérisé en ce que** l'élément de séparation (18) couvre une fente (21) entre le bouchon (15) et le boîtier (2).

3. Connecteur selon la revendication 1, **caractérisé en ce que** l'élément de séparation (18) présente une épaisseur telle que l'élément de séparation (18) ne fond pas complètement lors de l'application de la matière de moulage par injection (16).

4. Connecteur selon l'une quelconque des revendications 1 à 3, **caractérisé en ce que** l'élément de séparation (18) est formé du même matériau que la matière de moulage par injection (16).

5. Connecteur selon l'une quelconque des revendications 1 à 4, **caractérisé en ce que** le bouchon (15) retient un joint d'étanchéité (12) dans le boîtier (2), qui entoure le dispositif de chauffage (10, 11).

6. Connecteur selon l'une quelconque des revendications 1 à 5, **caractérisé en ce que** l'élément de séparation (18) fait saillie de l'orifice de sortie (9) et présente une arête (24) arrondie ou chanfreinée au niveau de sa section en saillie.

7. Connecteur selon l'une quelconque des revendications 1 à 6, **caractérisé en ce que** l'élément de séparation (18) présente un bord (19) coudé, périphérique sur au moins une partie de sa périphérie, dans lequel la section de sortie présente une tubulure de sortie (8), dans laquelle l'orifice de sortie (9) est agencé et le bord (19) couvre la tubulure de sortie (8) au niveau de sa périphérie.
